Europäisches Patentamt

European Patent Office

Office européen des brevets

(11) Veröffentlichungsnummer: **0 330 753**
**A2**

(12) **EUROPÄISCHE PATENTANMELDUNG**

(21) Anmeldenummer: 88121174.2

(51) Int. Cl.4: **B23Q 1/02** , **B23Q 5/38**

(22) Anmeldetag: 17.12.88

(30) Priorität: 27.02.88 DE 8802615 U

(43) Veröffentlichungstag der Anmeldung:
06.09.89 Patentblatt 89/36

(84) Benannte Vertragsstaaten:
AT BE CH DE ES FR GB GR IT LI LU NL SE

(71) Anmelder: **Neff Gewindespindeln GmbH**
**Alfred-Ritter-Strasse 47**
**D-7035 Waldenbuch(DE)**

(72) Erfinder: **Die Erfinder haben auf ihre**
**Nennung verzichtet**

(74) Vertreter: **Rüger, Rudolf, Dr.-Ing. et al**
**Patentanwälte Dr.-Ing. R. Rüger Dipl.-Ing. H.P.**
**Barthelt Webergasse 3 Postfach 348**
**D-7300 Esslingen/Neckar(DE)**

(54) Antriebsvorrichtung.

(57) Eine Antriebsvorrichtung zur linearen Bewegung eines auf einer zugeordneten Führungsbahn gelagerten Maschinenelementes weist wenigstens einen an dem beweglichen Maschinenelement gelagerten Zahnriemen (16) auf. Der Zahnriemen (16) steht mit einer Zahnstange (3) sowie einem von einer Antriebsquelle (17) angetriebenen Zahnrad (18) im Eingriff.

Um mit der Antriebsvorrichtung große Massen bewegen zu können, ohne komplizierte Stützkonstruktionen für die Zahnstange (3) zu benötigen, ist die Zahnstange (3) an einem Bett (2) aus Kunststoffbeton einstückig angeformt, das auch die Führungsbahn (4) trägt.

Fig.1

EP 0 330 753 A2

# Antriebsvorrichtung

Die Erfindung betrifft eine Antriebsvorrichtung zur linearen Bewegung eines auf einer zugeordneten Führungsbahn beweglich gelagerten Maschinenelementes, bspw. eines Schlittens, mit zumindest einem an dem beweglichen Maschinenelement gelagerten Zahnriemen, der mit einer von einer Antriebsquelle angetriebenen Antriebszahnrad und wenigstens einer der Führungsbahn zugeordneten Zahnstange in Eingriff steht.

Eine solche Antriebsvorrichtung ist bspw. aus der DE-PS 29 10 373 bekannt. Sie gestattet eine im wesentlichen spielfreie Umwandlung der Drehbewegung des Antriebszahnrades in eine Linearbewegung, mit der Werkzeugschlitten oder andere zu positionierende Elemente über große Bahnlängen spiel- und schlupffrei bei großer Einstellgenauigkeit bewegt werden können. Die bei dieser Antriebsvorrichtung verwendete Zahnstange ist dabei entweder aus mehreren gefrästen Stahlstangen-Stücken zusammengesetzt; sie kann aber auch aus dem gleichen Material wie der Zahnriemen bestehen und mit einer einfachen Trägerschiene fest verbunden, bspw. verklebt sein. Abgesehen davon, daß längere, aus Stahl gefräste Zahnstangen größerer Länge und entsprechender Genauigkeit einen erheblichen Herstellungsaufwand mit sich bringen, erfordert in beiden Ausführungsformen der Zahnstange diese Antriebsvorrichtung teure Stützkonstruktionen für die Zahnstange und die Führungsbahn, wenn auf dem Schlitten größere Lasten transportiert werden müssen. Dies ist bspw. dann der Fall, wenn die Antriebsvorrichtung zur linearen Bewegung von Robotern oder Handhabungsgeräten eingesetzt werden soll, einen Einsatzzweck, für den sie an sich besonders geeignet ist, weil sie - wie erwähnt - eine exakte Positionierung des Schlittens erlaubt.

Aufgabe der Erfindung ist es deshalb, eine Antriebsvorrichtung der erwähnten Art zu schaffen, die sich bei einfachem Aufbau und hoher Positioniergenauigkeit dadurch auszeichnet, daß sie auch für die Bewegung großer Massen geeignet ist, ohne daß dazu komplizierte Stützkonstruktionen für die Zahnstange erforderlich wären.

Zur Lösung dieser Aufgabe ist die Antriebsvorrichtung gemäß der Erfindung dadurch gekennzeichnet, daß die Zahnstange an einem Bett aus Kunststoffbeton einstückig angeformt ist, das auch die Führungsbahn trägt.

Das aus Kunststoffbeton bestehende Bett wird in der erforderlichen Länge und Gestaltung einfach gegossen; es kann auch ohne Aufwand aus mehreren stirnseitig aneinandergefügten Stücken zusammengesetzt in praktisch beliebiger Länge hergestellt werden, wobei die angeformte Zahnstange sich durch eine große Genauigkeit auszeichnet. Da die Übertragung der Reaktionskräfte über den biegsamen Zahnriemen erfolgt, dessen Zähne sich an die Verzahnung der angeformten Zahnstange im Eingriffsbereich elastisch anschmiegen, erfolgt eine gleichmäßige Krafteinleitung in die angeformten Zähne der Zahnstange, mit dem Ergebnis, daß keine örtlich begrenzten Stellen unzulässig hoher Flächenpressung auftreten. Dabei hat sich überraschenderweise gezeigt, daß unter diesen Umständen der Kunststoffbeton in der Lage ist, die im Bereiche der angeformten Verzahnung der Zahnstange auftretenden Schubbeanspruchungen praktisch verschleißfrei ohne weiteres aufzunehmen. Durch sein hohes spezifisches Gewicht gewährleistet das aus Kunststoffbeton bestehende Bett eine schwingungsfreie Führung auch schwerer Lasten, ohne daß dazu aufwendige Gestellkonstruktionen erforderlich wären.

In einer bevorzugten Ausführungsform ist das Bett nach Art eines länglichen Blockes ausgebildet. Die Führungsbahn kann mit Vorteil wenigstens eine an dem Bett angeordnete Führungsschiene aufweisen, wobei es besonders zweckmäßig ist, wenn das Bett schon bei der Herstellung eingelassene Befestigungsmittel aufweist, an denen zumindest die Führungsschiene befestigt ist. Um eine hochpräzise, im wesentlichen spielfreie Führung des beweglich gelagerten Maschinenelementes zu gewährleisten, kann das bewegliche Element mit Vorteil auf der wenigstens einer Führungsschiene mittels Linearlagermitteln gelagert sein.

Das aus Kunststoffbeton gegossene Bett kann entsprechend den jeweiligen Einsatzbedingungen massiv oder auch verrippt ausgebildet sein, wobei es in der Regel von Vorteil ist, wenn das Bett wenigstens eine Versteifungsrippe aufweist, die auf der dem Schlitten zu- oder abgewandten Seite in Längsrichtung verlaufend angeordnet ist. Diese Versteifungsrippe kann zweckmäßigerweise mit wenigstens einem durchgehenden Längskanal ausgebildet sein, der bspw. die Aufnahme von Zugankern gestattet, mit deren Hilfe Bettabschnitte vorbestimmter Länge stirnseitig aneinanderstoßend miteinander verspannt sind.

Auf dem Bett selbst können ohne weiteres alle jeweils erforderlichen Zusatzeinrichtungen angeordnet werden, wobei es von besonderem Vorteil ist, wenn auf dem Bett Stromzuführungseinrichtungen für an dem beweglichen Element vorgesehene Stromabnehmer angeordnet sind, die die Stromzuführung zu einem Antriebsmotor des Antriebsritzels oder für auf dem beweglichen Element vorgesehene Stromversorgungseinrichtungen für ein transportiertes Gerät etc. bewirken. Gleichzeitig können auf diesem Wege auch elektrische Steuersignale für dieses bewegte Gerät etc. übertragen werden.

Unter Kunststoffbeton ist in diesem Zusammenhang Beton mit einem Bindemittel auf der Basis polymerer oder polyaditiver Kunststoffe und ggfs. mit Zuschlagstoffen verstanden. Er wird auch Reaktonsharzbeton genannt (vergl."Industrie-Anzeiger" 98 Jg. Nr. 31 vom 16.4.1976).

Andere Weiterbildungen sind Gegenstand von Unteransprüchen.

In der Zeichnung ist ein Ausführungsbeispiel des Gegenstandes der Erfindung dargestellt. Es zeigen:

Fig. 1 eine Antriebsvorrichtung gemäß der Erfindung in perspektivischer,schematischer Darstellung,

Fig. 2 die Antriebsvorrichtung nach Fig. 1, in einer schematischen, perspektivischen Prinzindarstellung, unter Veranschaulichung der wesentlichen Teile des Innenaufbaus des bewegten Elementes,

Fig. 3 die Antriebsvorrichtung nach Fig. 1, in einer Draufsicht,

Fig. 4 die Antriebseinrichtung nach Fig. 1, in einer Seitenansicht, teilweise aufgeschnitten,

Fig. 5 die Antriebsvorrichtung nach Fig. 1, in einer stirnseitigen Ansicht,

Fig. 6 die Antriebsvorrichtung nach Fig. 1, geschnitten längs der Linie VI-VI der Fig.1, in einer zweiten Ansicht und in einem anderen Maßstab,

Fig. 7 das Bett der Antriebsvorrichtung nach Fig.1 in einer Draufsicht,

Fig. 8 das Bett nach Fig. 7, in einer Seitenansicht,

Fig. 9 das Bett nach Fig. 7, in einer stirnseitigen Ansicht,

Fig.10 das Antriebszahnrad und den Zahnriemen der Vorrichtung nach Fig. 1, in einer Seitenansicht und in einer Prinzipdarstellung, sowie in einem anderen Maßstab, und

Fig.11 die Abdeckung der Laufbahn der Vorrichtung nach Fig. 1, in einer perspektivischen Teildarstellung und in einem anderen Maßstab.

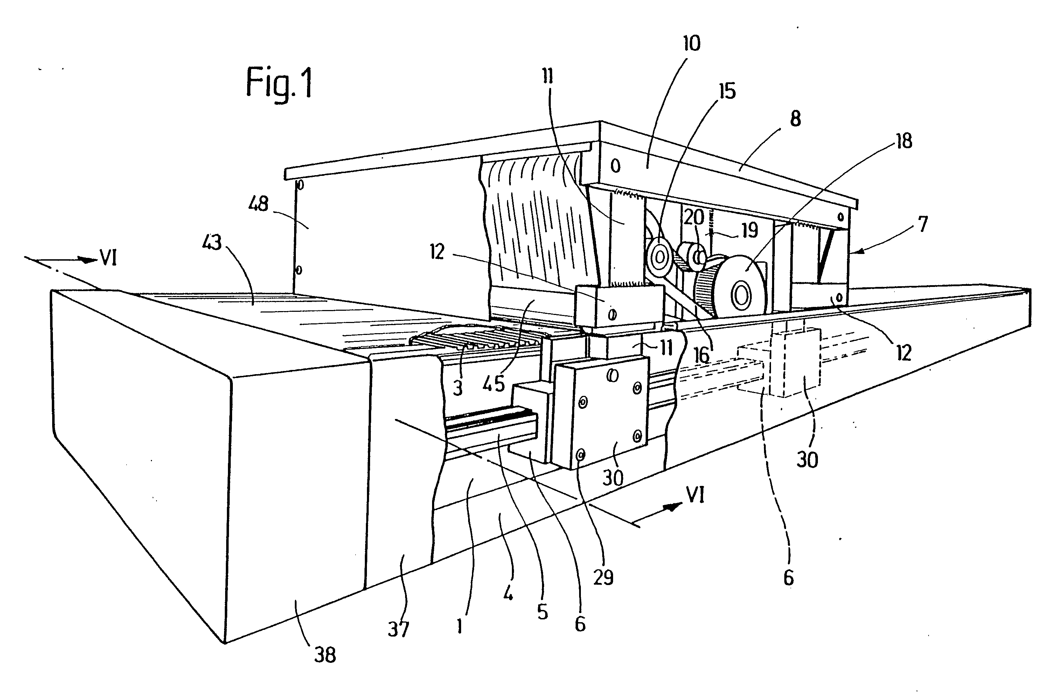

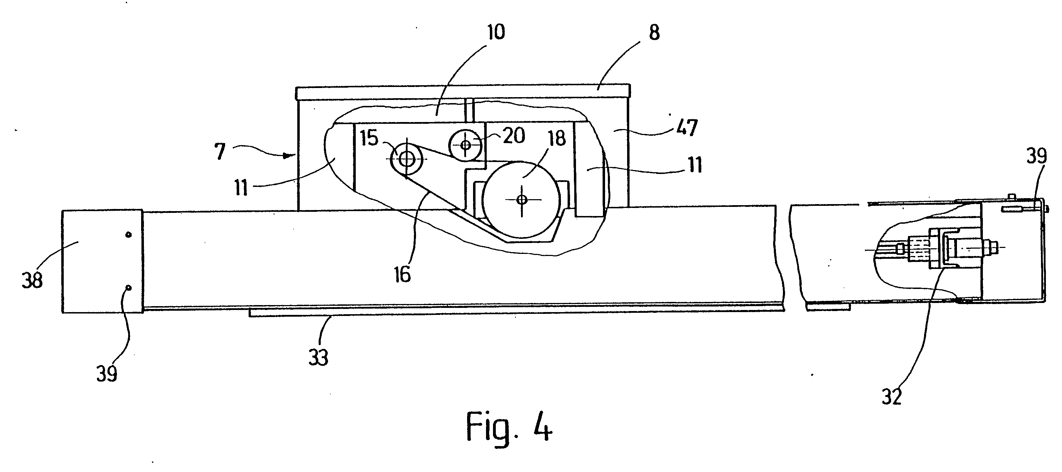

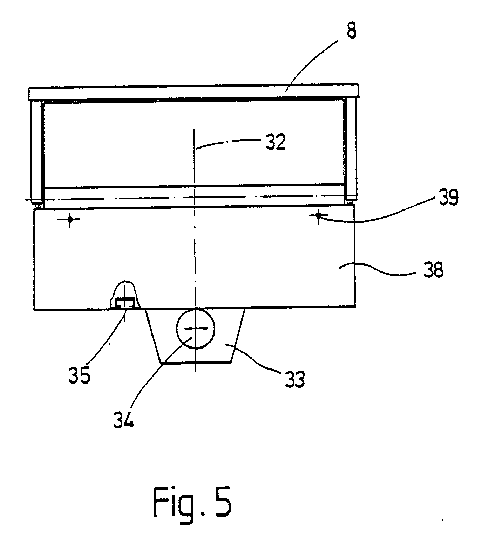

Die in den Fig. 1 bis 5 dargestellte Antriebsvorrichtung weist ein aus Kunststoffbeton gegossenes, massives, längliches Bett 2 von rechteckiger Querschnittsgestalt auf, das im wesentlichen parallelflächig begrenzt ist und auf seiner ebenen oberen Fläche eine angeformte Zahnstange 3 trägt, die sich parallel zu seinen beiden Seitenwänden 4 erstreckt. Die Zahnstange 3 ist seitlich gegen die Längsmittelebene 32 versetzt angeordnet. Die Zähne ihrer geradlinigen Verzahnung verlaufen rechtwinklig zu dieser Längsmittelebene.

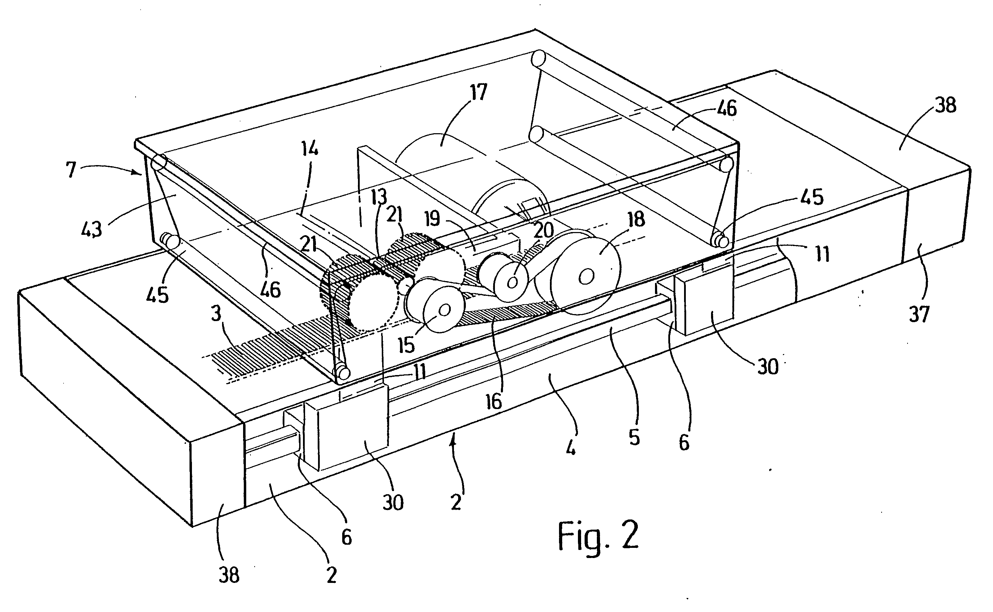

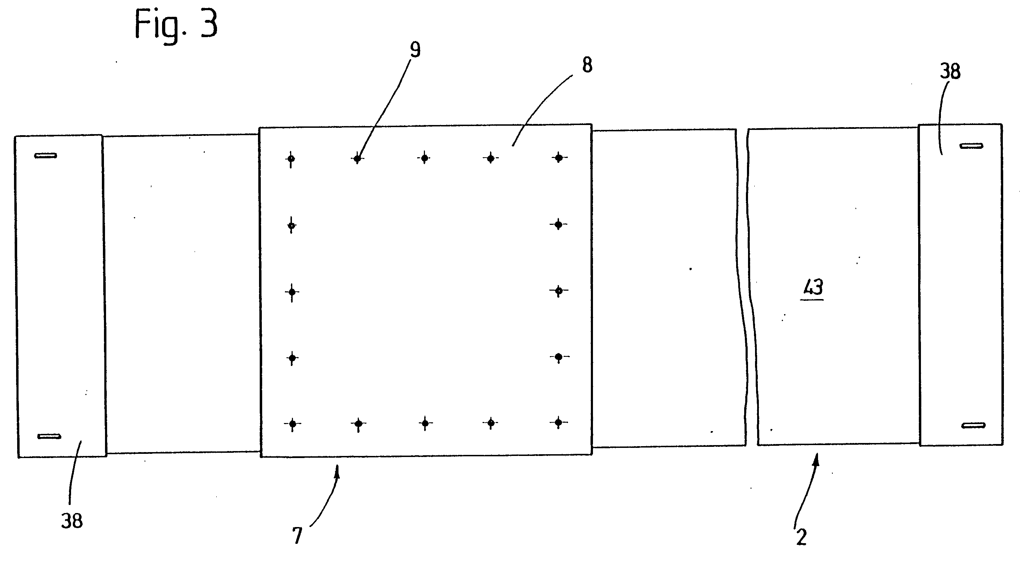

An den beiden Seitenwänden 4 des Bettes 2 sind zwei parallele Führungsschienen 5 befestigt, auf denen mittels vier Linearlagern 6 ein im wesentlichen rechteckiger Schlitten 7 längsverschieblich geführt ist, der eine ebene Montageplatte 8 trägt, die mit Gewindebohrungen 9 (Fig. 3) versehen ist, mit deren Hilfe ein in der Zeichnung nicht weiter dargestelltes zu transportierendes Gerät, bspw. ein Roboter oder ein Handhabungsgerät festgeschraubt werden kann. In dem gestellartigen, aus rechtwinklig miteinander verschweißten Gestellteilen 10, 11, 12 zusammengebauten Schlitten 7 ist ein Antriebszahnrad 13 mit horizontal ausgerichteter, quer zu der Zahnstange 3 verlaufender Drehachse 14 (Fig. 2) drehbar gelagert, das einenends drehfest mit einer koaxialen Zahnriemenscheibe 15 verbunden ist, die über einen endlosen Zahnriemen 16 mit einer auf die Antriebswelle eines in dem Schlitten 7 untergebrachten Elektromotors 17 aufgesetzten Zahnriemenscheibe 18 gekuppelt ist. Eine an einem Gestellteil 19 drehbar gelagerte Spannrolle 20 hält den Zahnriemen 16 gespannt.

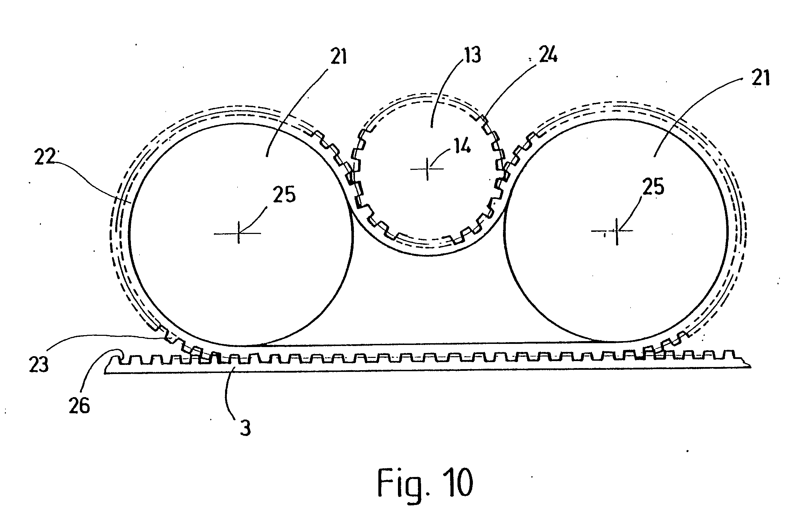

Seitlich neben dem Antriebszahnrad 13 sind in entsprechenden Gestellteilen des Schlittens 7 zwei mit der Drehachse 14 des Antriebszahnrades 13 koaxiale Rollen 21 drehbar gelagert, über die ein endloser Zahnriemen 22 verläuft, der in der aus Fig. 10 ersichtlichen Weise das Antriebszahnrad 13 teilweise umschlingt und mit seiner Verzahnung 23 mit der Verzahnung 24 des Antriebszahnrades 13 in Eingriff steht. Die beiden Rollen 21 sind mit ihren parallelen Drehachsen 24 im Abstand zueinander stehend unmittelbar oberhalb der Zahnstange 3 derart angeordnet, daß der Zahnriemen 22 mit seiner Verzahnung 23 in Eingriff mit der Verzahnung 26 der Zahnstange 3 gehalten ist.

Wenn somit der Antriebsmotor 17 das Antriebszahnrad 13 über den Antriebszahnriemen 16 um seine Drehachse 14 in Umdrehung versetzt, wälzt sich der von den Rollen 20 mit der Zahnstange 3 in Eingriff gehaltene Zahnriemen 22 fortlaufend auf der Verzahnung 26 der Zahnstange 3 ab, mit dem Ergebnis, daß der Schlitten 7 eine entsprechende Linearbewegung längs der Führungsschienen 5 und damit des Bettes 2 ausführt. Die Rollen 20 und das Antriebszahnrad 13 liegen genau oberhalb der Zahnstange 3; ihre axiale Länge ist in der Regel etwas größer als die Breite der Zahnstange 3, die wiederum der Breite des Zahnriemens 22 entspricht.

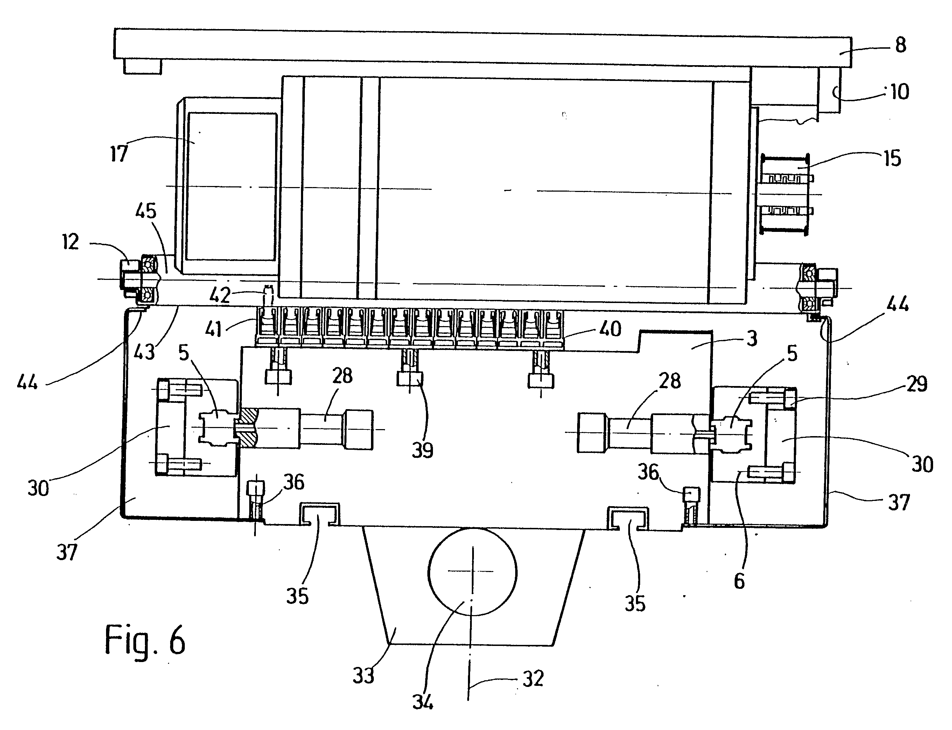

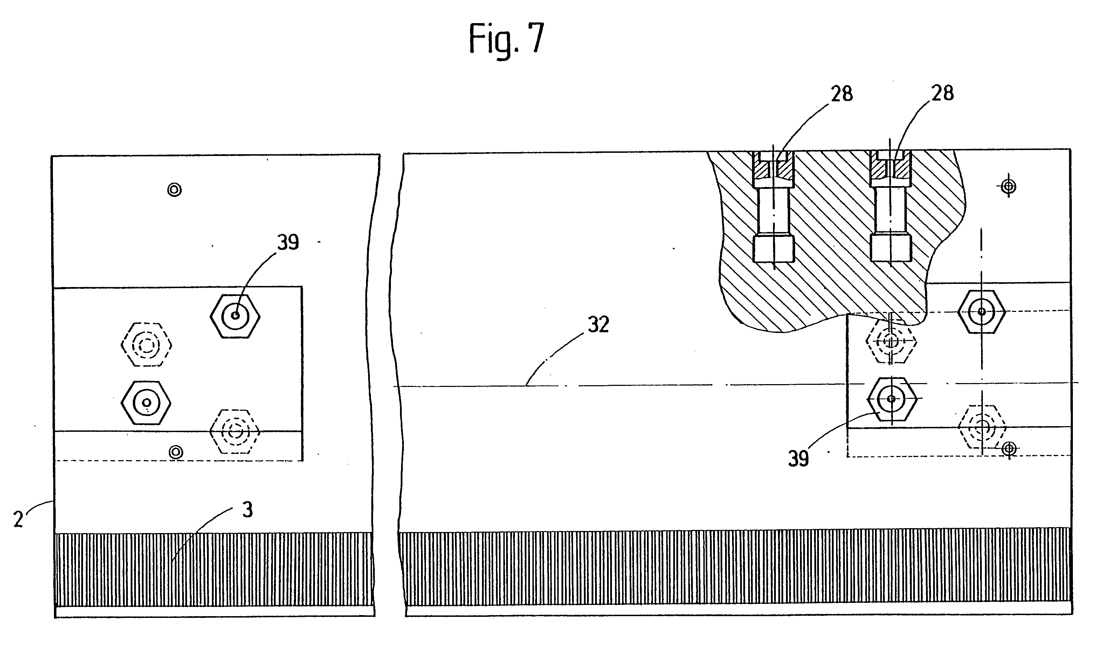

Insbesondere aus den Fig. 6 bis 9 ist zu ersehen, daß in das aus Kunststoffbeton bestehende, blockförmige Bett 2 im Bereiche der Seitenwände 4 mit ihren Achsen in einer horizontalen Mittelebene liegende Gewindebüchsen 28 im gegenseitigen Abstand eingelassen sind, an denen die beiden Führungsschienen 5 mittels nicht weiter dargestellter durchgehender Schraubenbolzen festgeschraubt sind. Die Führungsschienen 5 weisen eine im wesentlichen Doppel-T-förmige Querschnittsgestalt auf. Sie tragen vier Kugellaufbahnen, auf denen die Kugelreihen der mit umlaufenden Kugeln ausgebildeten Linearlager 6 sich abwälzen. An den Linearlagern 6 sind mittels Schraubenbolzen 29 Befestigungsblöcke 30 festgeschraubt, die ihrerseits mit den Gestellteilen 11 verschweißt sind.

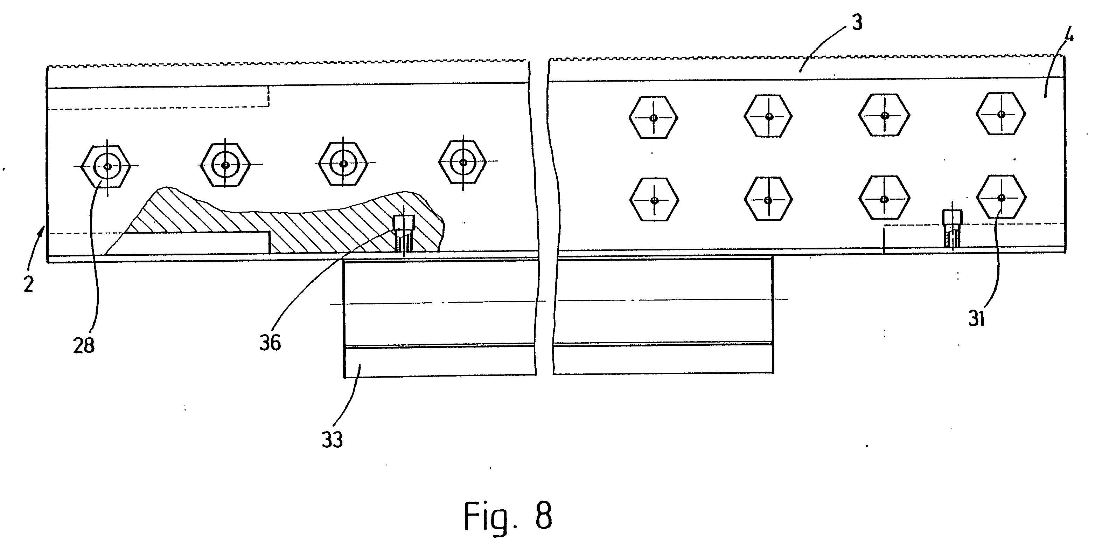

Im Bereiche wenigstens eines Endes des Bettes 2 sind in der aus Fig. 8 zu entnehmenden Weise weitere Gewindebüchsen 31 eingelassen, die dazu dienen, an den Seitenwänden 4 entweder elastische Endlagendämpfungseinrichtungen für den Schlitten anzuschrauben oder Verbindungslaschen zu befestigen, die stirnseitig aneinanderstoßende Bettabschnitte miteinander verbinden.

Außerdem ist an dem Bett 2 auf der dem Schlitten 7 abgewandten Unterseite eine symmetrisch zu der vertikalen Längsmittelebene 32 (Fig. 6) sich erstreckende Versteifungsrippe 33 angeformt, die eine durchgehende, mit ihrer Achse in der Längsmittelebene 32 verlaufende eingeformte Bohrung 34 aufweist. Die miteinander fluchtenden Bohrungen 34 stirnseitig aneinander anschließender Bettabschnitte erlauben die Aufnahme eines nicht weiter dargestellten durchgehenden Zugankers, mit dessen Hilfe diese Bettabschnitte axial miteinander verspannt sind.

Beidseitig der sicht nicht über die gesamte Länge des Bettes 2 erstreckenden Versteifungsrippe 33 sind an der Unterseite des Bettes 2 zwei parallel zueinander verlaufende U-Profilschienen 35 in das Bett 2 eingelassen, die dazu Verwendung finden können, das Bett 2 auf einem Fundament oder dergl. festzuschrauben. Seitlich neben den Profilschienen 35 in das Bett 2 eingelassene Gewindebüchsen 36 dienen schließlich dazu, sich über die Länge des Bettes 2 erstreckende seitliche Abdeckblenche 37 von im wesentlichen U-förmiger Querschnittsgestalt festzuschrauben, die eine Schutzabdeckung für die Führungsschienen 5 und die Linearlager 6 bilden. Endseitig sind auf die Abdeckbleche 37 stirnseitige Blechgehäuse 38 bei 39 aufgeschraubt, so daß das Bett 2 mit seinen Führungsschienen 5 und den Endlagendämpfungseinrichtungen 32 auch stirnseitig völlig gekapselt ist.

Auf der dem Schlitten 7 zugewandten ebenen Oberseite des Bettes 2 sind seitlich neben der angeformten Zahnstange 3 Gewindebüchsen 39 in das Bett 2 eingelassen, an dessen ein gegebenenfalls mehrteiliger Isoliermaterialkörper 40 angeschaubt ist, der parallele Stromzuführungsbahnen 41 trägt, die elektrisch gegeneinander isoliert mit zugeordneten Stromabnehmern an den Schlitten 7 in Eingriff stehen, von denen einer in Fig. 6 schematisch bei 42 angedeutet ist und an die die elektrischen Zuführleitungen des Antriebsmotors 17 und in der Zeichnung nicht weiter dargestellte elektrische Anschlußeinrichtungen zur Versorgung eines auf der Montageplatte 8 angeordneten Gerätes verbunden sind.

Die Stromabnehmerschienen 41 und die Zahnstange 3 sind beidseitig des Schlittens 7 durch ein aus Kunststoff bestehendes, dünnes, flexibles Abdeckband 43 (Fig. 1,2 und 11) abgedeckt, das endseitig an den beiden Blechgehäusen 38 befestigt ist und dessen Breite so gewählt ist, daß es die nach einwärts gebogenen Flanschen 44 (Fig. 6) der seitlichen Abdeckbleche 37 übergreift. Das Abdeckband 43 ist über zwei achsparallele, an der Vorder- und Rückseite des Schlittens 7 an dessen Gestellteilen 12 drehbar gelagerte Umlenkwalzen 45 nach oben bis unter die Montageplatte 8 geführt. Es wird sodann durch zwei ebenfalls achsparallele und an den Gestellteilen 10 drehbar gelagerte weitere Umlenkwalzen 46 oberhalb der Rollen 20 in die Horizontalrichtung umgeleitet und parallel zu der Montageplatte 8 geführt. Seitliche Abdeckbleche 47, 48 schließen den Schlitten 7 nach außen zu ab. Durch diese Anordnung ist gewährleistet, daß das Bett 2 und die darauf angeordneten Einrichtungen, bspw. die Zahnstange 3 und die Stromabnehmerschienen 41, einschließlich der gesamten Oberseite des Bettes 2 über die gesamte Bettlänge unabhängig von der jeweiligen Stellung des Schlittens 7 einwandfrei abgedeckt sind.

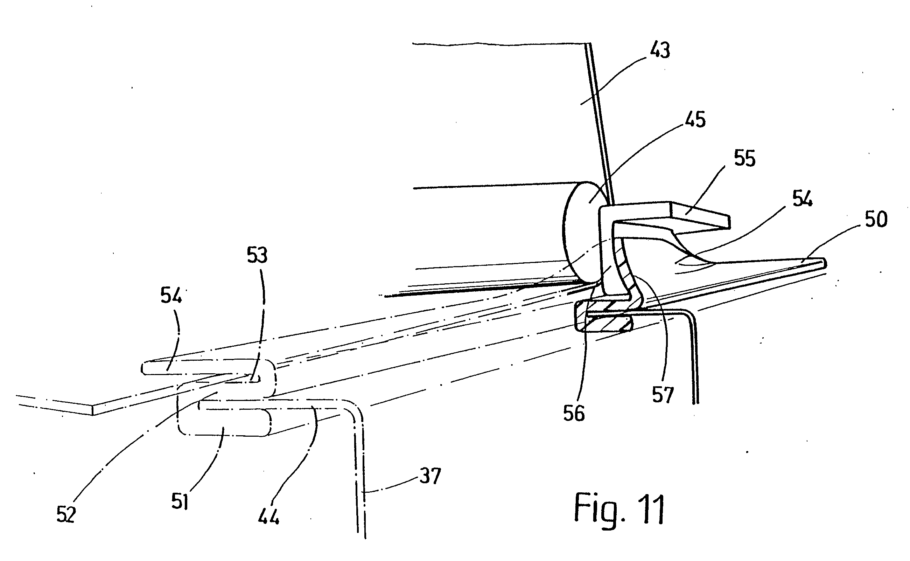

Um zu vermeiden, daß insbesondere bei größeren Bettlängen das Abdeckband 43 sich seitlich von den Flanschen 44 der Abdeckbleche 37 abhebt oder gegen diese seitlich verschiebt, sind besondere Vorkehrungen getroffen, die insbesondere aus Fig. 11 zu ersehen sind:

Mit den Abdeckblechen 37 ist jeweils eine sich über die Länge des Bettes 2 erstreckende, aus Kunststoff bestehende biegsame Abdichtungsprofilleiste in Gestalt eines Kunststoffprofilbandes 50 verbunden. Das Kunststoffprofilband 50 weist eine im wesentlichen S- oder Z-förmige Profilgestalt mit einem leistenförmigen Befestigungsschenkel 51 und einem dazu parallelen Auflagerschenkel 52 auf. An den Auflagerschenkel 52 schließt sich unter Ausbildung eines zu dem Abdeckband 43 hin sich öffnenden Schlitzes 53 eine im wesentlichen ebenfalls horizontale biegsame Lippe 54 an, die normalerweise das randseitig in den Schlitz 53 eingreifende Abdeckband 43 überdeckt. Das Kunststoffprofilband 50 ist mit seinen beiden sich im Querschnitt U-förmig aneinanderschließenden Schenkeln 51, 52 auf den Flansch 44 des jeweiligen Abdeckbleches 37 aufgeklemmt. Es liegt mit seiner Lippe 54 unter Eigenvorspannung an dem Abdeckband 43 an, das somit zwischen dem Auflagerschenkel 52 und der Lippe 54 staub- und schmiermitteldicht eingeklipst ist.

An dem Schlitten 7 sind im Bereiche der beiden unteren Umlenkwalzen 45 auf beiden Seiten jeweils zwei im Querschnitt etwa L-förmige Aufweitelemente 55 befestigt, von denen jedes einen etwa vertikalen Schenkel 56 aufweist, der eine dachoder teilwellenförmig gekrümmte Auflagefläche 57 für die Lippe 54 aufweist. Die Anordnung ist in der aus Fig. 11 ersichtlichen Weise derart getroffen, daß die von der Randseite der Lippe 54 her etwa keilförmig nach außen laufende Auflagefläche 57 unter die Lippe 54 greift, derart, daß diese im Bereiche der unteren Umlenkwalzen 45 im wesentlichen vertikale hochgebogen wird. Da der Schenkel 56 seitlich neben dem benachbarten Rand des Abdeckbandes 43 steht, kann somit das Abdeckband 43 durch die jeweilige untere Umlenkwalze 45 unbehindert von der aufgebogenen Lippe 54 aus dem Schlitz 53 des Kunststoffprofilbandes 50 nach oben zu herausgeleitet oder - an der gegenüberliegenden Stirnseite des Schlitzes - in den Schlitz 53 zurückgeleitet werden, der unter der Wirkung der Eigenelastizität der Lippe 54 sich in den Bereich vor und hinter dem jeweiligen Aufweitelement 55 selbsttätig schließt.

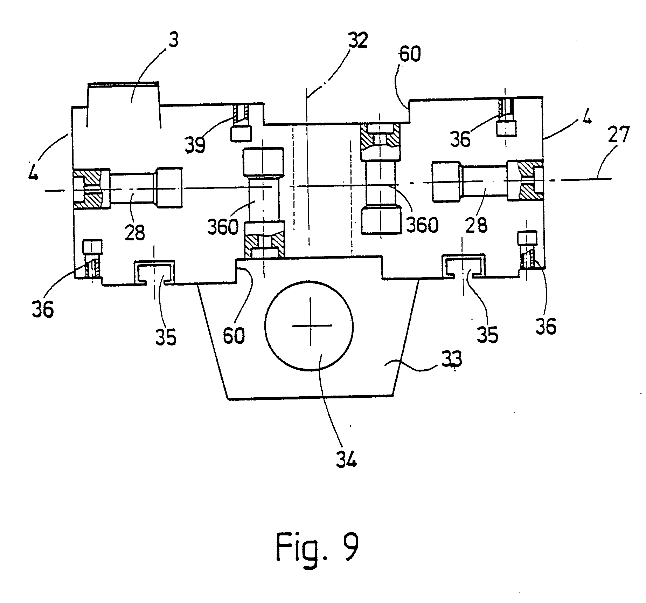

Die Versteifungsrippe 33 kann an das Bett 2 angeformt sein. Es ist aber auch möglich, die Versteifungsrippe 33 an das Bett 2 oben oder unten anzuschrauben, wozu das Bett 2 in der aus Fig. 9 ersichtlichen Weise mit symmetrischer Anordnung der Gewindebuchsen 360 ausgebildet ist. Eine Führungsnut 60 dient jeweils zur lagerichtigen Positionierung der Versteifungsrippe 33.


**Ansprüche**

1. Antriebsvorrichtung zur linearen Bewegung eines auf einer zugeordneten Führungsbahn beweglich gelagerten Maschinenelementes, bspw. eines Schlittens, mit zumindest einem an dem beweglichen Maschinenelement gelagerten Zahnriemen, der mit einem von einer Antriebsquelle angetriebenen Antriebs-Zahnrad und wenigstens einer der Führungsbahn zugeordneten Zahnstange in Eingriff steht, dadurch gekennzeichnet, daß die Zahnstange (3) an einem Bett (2) aus Kunststoffbeton einstückig angeformt ist, das auch die Führungsbahn (4) trägt.

2. Antriebsvorrichtung nach Anspruch 1, dadurch gekennzeichnet, daß das Bett (2) nach Art eines länglichen Blockes ausgebildet ist.

3. Antriebsvorrichtung nach Anspruch 1 oder 2, dadurch gekennzeichnet, daß die Führungsbahn wenigstens eine an dem Bett (2) angeordnete Führungsschiene (5) aufweist.

4. Antriebsvorrichtung nach Anspruch 3, dadurch gekennzeichnet, daß das Bett (2) eingelassene Befestigungselemente (28,31,36,39) aufweist, an denen zumindest die Führungsschiene (5) befestigt ist.

5. Antriebsvorrichtung nach Anspruch 3 oder 4, dadurch gekennzeichnet, daß das bewegliche Element (7) auf der wenigstens einen Führungsschiene (5) mittels Linearlagermitteln (6) gelagert ist.

6. Antriebsvorrichtung nach einem der vorhergehenden Ansprüche, dadurch gekennzeichnet, daß das Bett (2) wenigstens eine Versteifungsrippe (33) aufweist, die auf der dem beweglichen Element (7) zu- oder abgewandten Seite in Längsrichtung verlaufend angeordnet ist.

7. Antriebsvorrichtung nach Anspruch 6, dadurch gekennzeichnet, daß die Versteifungsrippe (33) wenigstens einen durchgehenden Längskanal (34) aufweist.

8. Antriebsvorrichtung nach einem der vorhergehenden Ansprüche, dadurch gekennzeichnet, daß auf dem Bett (2) Stromzufuhreinrichtungen (40,41) für an dem beweglichen Element (7) vorgesehene Stromabnehmer (42) angeordnet sind.

9. Antriebsvorrichtung nach einem der vorhergehenden Ansprüche, dadurch gekennzeichnet, daß das Bett (2) zumindest im Bereiche seiner dem beweglichen Element (7) zugewandten Seite durch ein biegsames Abdeckband (43) abgedeckt ist, das über das bewegliche Element hinweg oder durch dieses hindurchgeführt ist.

10. Antriebsvorrichtung nach Anspruch 9, dadurch gekennzeichnet, daß auf wenigstens einer Längsseite des Bettes (2) ein sich zumindest über die von dem beweglichen Element (7) überfahrene Laufbahnlänge erstreckendes Kunststoffprofilband (50) angeordnet ist, das eine das Abdeckband (43) randseitig übergreifende biegsame Lippe (54) aufweist und daß an dem beweglichen Element (7) wenigstens ein mitlaufendes, die Lippe (54) unter greifendes und diese örtlich elastisch aufbiegendes Aufweitelement (55) in der Nähe einer das Abdeckband (43) in dem Bereich der aufgebogenen Lippe (54) von dieser wegleitenden Umlenkeinrichtung (45) angeordnet ist.

11. Antriebsvorrichtung nach Anspruch 10, dadurch gekennzeichnet, daß das Kunststoffprofilband (50) eine im wesentlichen S- oder Z-förmige Profilgestalt mit einem Auflager- und einem Befestigungsschenkel (52,51) aufweist.

Fig.1

Fig. 2

Fig. 3

Fig. 4

Fig. 5

Fig. 6

EP 0 330 753 A2

Fig. 7

EP 0 330 753 A2

Fig. 8

EP 0 330 753 A2

Fig. 9

Fig. 10

EP 0 330 753 A2

Fig. 11

43

45

55

54

50

53

54

52

51

44

37

56

57

EP 0 330 753 A2